# EUROPEAN PATENT SPECIFICATION

(11) **EP 2 690 833 B1**
(45) Date of publication and mention of the grant of the patent: **02.08.2017**
(21) Application number: 12845676.1
(22) Date of filing: 05.06.2012
(51) Int. Cl.: H04L 12/58

(54) **MEDIA MESSAGE SENDING METHOD, DEVICE AND SYSTEM**
VERFAHREN, VORRICHTUNG UND SYSTEM ZUM SENDEN VON MEDIENNACHRICHTEN
PROCÉDÉ, DISPOSITIF ET SYSTÈME D'ENVOI DE MESSAGE MULTIMÉDIA

(30) Priority: 04.11.2011 CN 201110345889
(43) Date of publication of application: 29.01.2014
(73) Proprietor: ZTE Corporation, Shenzhen, Guangdong 518057 (CN)
(72) Inventor: DING, Xin, Shenzhen Guangdong 518057 (CN); LU, Yan, Shenzhen Guangdong 518057 (CN)
(74) Representative: D'Halleweyn, Nele Veerle Trees Gertrudis
(86) International application number: PCT/CN2012/076480
(87) International publication number: WO 2013/063934

(56) References cited:
- CN-A- 1 561 076
- CN-A- 101 098 313
- CN-A- 101 699 806
- US-A1- 2003 191 799
- US-A1- 2007 185 963
- US-A1- 2009 106 455
- US-B1- 6 678 705
- CRISPIN UNIVERSITY OF WASHINGTON M: "Internet Message Access Protocol (IMAP) - MULTIAPPEND Extension; rfc3502.txt", 20030301, 1 March 2003 (2003-03-01), XP015009284, ISSN: 0000-0003

## Description

### Technical Field

The present document relates to the field of communication, and particularly, to a method, device and system for sending media messages.

### Background of the Related Art

An Internet Message Access Protocol (IMAP) is an increasingly popular e-mail access protocol in recent years. With such protocol, a recipient can expediently acquire information of mails and download the required mails from a mail server. The IMAP provides functions of selectively receiving the mails for the recipient, that is, it is not necessary for the recipient to download an entire mail to acquire the related information (such as a mail subject and an addresser) of the mail, and only when the recipient selects a certain mail and wants to read contents of the mail, a client will download the specific contents of the mail from the server. In addition, through the IMAP, the recipient can maintain his/her mail directories in the server and can establish or change mailboxes in the server.

However, the IMAP does not provide services of sending the mail to a mailbox of the recipient. A sender can only send the mail to a mailbox of the sender in the server through an APPEND instruction of the IMAP at most. If the sender is required to send the mail to a specific recipient, according to the related art, the sender can only send the mail to the specific recipient through a Simple Mail Transfer Protocol (SMTP). Therefore, in order to send and receive the mail, a user equipment must simultaneously support two protocols, IMAP and SMTP, and install an IMAP client and an SMTP client, thereby increasing the complexity of the user equipment.

US patent application with Publ. No.US 2009/106455 A1 discloses a method for synchronizing messages between multiple terminals including: receiving a message state change notification carrying a message state and a message state identifier from a first terminal of a user; and sending a message state change notification to the second terminal of the user, according to the message state change notification.

### Summary of the Invention

The present document is disclosed with respect to the problem that a user equipment cannot send a mail to a recipient through IMAP in the related art, thus, the main object of the present document is to provide a method, device and system for sending media messages.

According to one aspect of the present document, a method for sending media messages is provided, which comprises: a media server receiving a media message which is delivered by a sending client through an Internet Message Access Protocol (IMAP) to a storage unit for message to be sent pre-allocated to a sending user; the media server storing the received media message in the storage unit for message to be sent of the sending user; and the media server acquiring a media message unsent in the storage unit for message to be sent, and forwarding the media message according to an identifier of a recipient user carried in the acquired media message;
wherein, the step of the media server forwarding the media message according to an identifier of a recipient user carried in the acquired media message comprises:
with regard to a situation that the recipient user and the sending user belong to the same media server, the media server directly sending the media message to a mailbox of the recipient user within the media server;
with regard to a situation that the recipient user and the sending user belong to different media servers, the media server sending the media message to another media server to which the recipient user belongs through an Simple Mail Transfer Protocol (SMTP) before the step of the media server receiving the media message, further comprising: the media server firstly performing authentication on the sending user; after the authentication, the media server establishing the storage unit for the sending user.
Preferably, the step of a media server receiving a media message which is delivered by a sending client through an IMAP to a storage unit for message to be sent of the sending client comprises: the media server receiving the media message delivered by the sending client to the storage unit for message to be sent through an APPEND instruction of the IMAP.

Preferably, the step of the media server acquiring a media message unsent in the storage unit for message to be sent, and forwarding the media message according to an identifier of a recipient user carried in the acquired media message comprises: the media server scanning the storage unit for message to be sent at regular intervals, acquiring the media message unsent in the storage unit for message to be sent, and forwarding the media message according to the identifier of the recipient user carried in the acquired media message.

Preferably, the step of the media server acquiring a media message unsent in the storage unit for message to be sent, and forwarding the media message according to an identifier of a recipient user carried in the acquired media message comprises: when the storage unit for message to be sent of the media server receives the media message delivered by the sending client, the media server forwarding the media message according to the identifier of the recipient user carried in the media message.

According to another aspect of the present document, a device for sending media messages is provided, which is located at a media server side and comprises: a receiving unit, configured to receive a media message which is delivered by a sending client through an Internet Message Access Protocol (IMAP) to a storage unit for message to be sent pre-allocated to a sending user; the storage unit for message to be sent, configured to store the media message received by the receiving unit; an acquisition unit, configured to acquire a media message unsent in the storage unit for message to be sent; and a sending unit, configured to forward the media message according to an identifier of a recipient user carried in the media message acquired by the acquisition unit;
wherein, the sending unit is configured to,
with regard to a situation that the recipient user and the sending user belong to the same media server, directly send the media message to a mailbox of the recipient user within the media server;
with regard to a situation that the recipient user and the sending user belong to different media servers, send the media message to another media server to which the recipient user belongs through an Simple Mail Transfer Protocol (SMTP) wherein before the receiving unit receives the media message, the device firstly performs authentication on the sending user, and establishes the storage unit for the message to be sent for the sending user.
Preferably, the acquisition unit is configured to scan the storage unit for message to be sent at regular intervals and acquire the media message unsent in the storage unit for message to be sent.

Preferably, the storage unit for message to be sent is further configured to trigger the acquisition unit when receiving the media message delivered by the client.

According to another aspect of the present document, a system for sending media messages is provided, which comprises: a sending client, configured to deliver a media message to a media server through an Internet Message Access Protocol (IMAP), wherein, the media message is a media message delivered to a storage unit for message to be sent pre-allocated to a sending user, and the media message carries an identifier of a recipient user; and the media server, comprising the above device.

Preferably, the sending client delivers the media message through an APPEND instruction of the IMAP.

In the invention, a sender can send media message to a media server to which the sender belongs through the IMAP, and the media server stores the media message in a storage unit for message to be sent of a sending user, and forwards the media message according to an identifier of a recipient carried in the media message, thus the sender is enabled to send the media message to the receiver through the media server in a situation that only the IMAP is supported, which reduces the complexity of the user equipment.

### Brief Description of Drawings

Here, the described accompanying drawings are used to provide a further understanding of the present document and constitute a part of the present application. The schematic examples and illustrations thereof of the present document are used to explain the invention, but not to constitute an inappropriate limitation of the invention. In the drawings:
FIG. 1 is a flow diagram of a method for sending media messages according to the example of the present document.
FIG. 2 is a flow diagram of a method for sending media messages according to the preferred example 1 of the present document.
FIG. 3 is a flow diagram of a method for sending media messages according to the preferred example 2 of the present document.
FIG. 4 is a block diagram of structure of a device for sending media messages according to the example of the present document.
FIG. 5 is a schematic diagram of structure of a system for sending media messages according to the example of the present document.

### Preferred Embodiments of the Invention

It should be noted that the examples in the present document and the characteristics in the examples can be combined with each other in the condition of no conflict. The present document will be described in detail with reference to the accompanying drawings and in combination with the examples below.

A method for sending media messages through IMAP is provided, and with the method in the example of the present document, a user equipment is enabled to send and receive mails (i.e. the media messages) when only an IMAP client is required to be installed on the user equipment. In the example of the present document, a media server can set a mailbox used for storing media messages to be sent (i.e. a storage unit for message to be sent corresponding to a sending user, which is hereinafter called as "a mailbox to be sent" for short) for a sender; after an IMAP client of the sending user is authenticated successfully (through the existing IMAP authentication mechanism), the mailbox to be sent can be accessed; in the example of the present document, when the sender is required to send a certain media message, the client sends the media message to be sent of the sender to the mailbox to be sent of the sender through the IMAP (e.g., an APPEND instruction), and if the client delivers a new media message and the media message carries an identifier of a recipient, the media server sends the media message to a recipient specified in the media message. For example, the media message can directly send the media message to a mailbox of a recipient user within the media server (with regard to a situation that the recipient user and the sending user belong to the same media server), or the media server sends the media message to a media server to which the recipient user belongs through an SMTP (with regard to a situation that the recipient user and the sending user belong to different media servers).

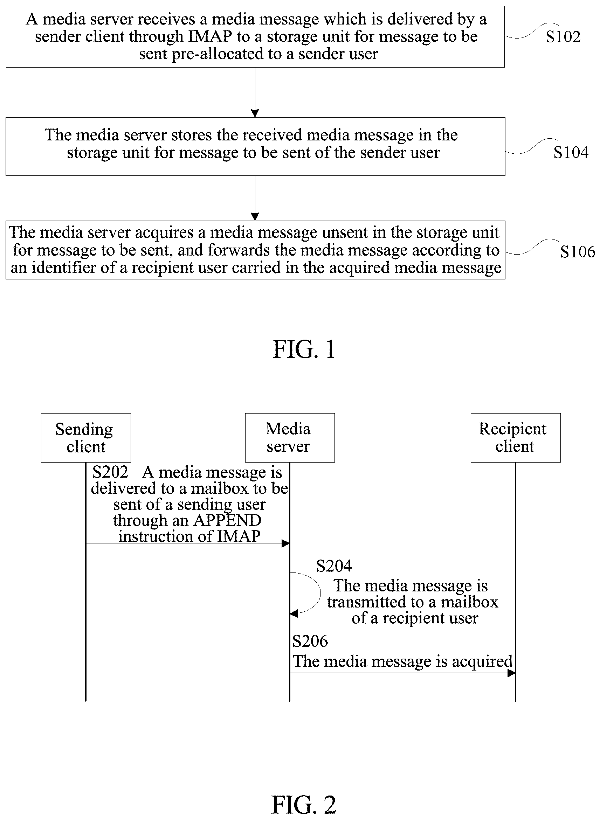

FIG. 1 is a flow diagram of a method for sending media messages according to the example of the present document, and as shown in FIG.1, the method for sending the media messages mainly includes step S102 to step S106.

In step S102, a media server receives a media message which is delivered by a sending client through an Internet Message Access Protocol (IMAP) to a storage unit for message to be sent pre-allocated to a sending user.

For example, the sending client can send a media message to a mailbox to be sent of the sending client through an APPEND instruction of the IMAP, and the APPEND instruction can carry an identifier of the sending user. Meanwhile, if the sender is required to send the media message to a specified recipient, the sender also can carry an identifier of the recipient in the media message.

Before executing the step S102, in a preferred embodiment of the example of the present document, the media server can firstly perform authentication on the sender, thus interference from an illegal user to the media server is avoided, so that the server obtain better management. Then, after the authentication, the media server also can establish a mailbox of the sender for a sender which is authenticated successfully (that is, the storage unit for message to be sent corresponding to the sending user is allocated), which is used for sending the media messages.

In step S104, the media server stores the received media message in the storage unit for message to be sent of the sending user.

After receiving the media message delivered by the sender to a mailbox to be sent of the sender, the media server stores the media message in the storage unit for message to be sent of the sending user (i.e. the mailbox to be sent), which serves as the media message to be sent.

In step S106, the media server acquires a media message unsent in the storage unit for message to be sent, and forwards the media message according to an identifier of a recipient user carried in the acquired media message.

The media server of the example of the present document can periodically scan media messages in the storage unit for message to be sent, and it judges whether an unsent media message is stored in the storage unit for message to be sent, if yes, the media message is forwarded according to the identifier of the recipient user carried in the media message. Or, the media server also can scan the media message stored in the storage unit for message to be sent when detecting a predetermined triggering event, and it judges whether an unsent media message is stored in the storage unit for message to be sent, if yes, the media message is forwarded according to the identifier of the recipient user carried in the media message. For example, when the storage unit for message to be sent receives the media message delivered by the sending client, the media server can forward the media message according to the identifier of the recipient user carried in the media message.

In the example of the present document, the media server can forward the media message through the SMTP, and it also can forward the media message in other ways, which is not specifically limited in the example of the present document.

In the related art, the sender cannot send the media message to the mailbox of the recipient through the IMAP, and it can only depend on other protocols, such as the SMTP. In the example of the present document, the sender delivers the media message to the media server through the IMAP, then the media server forwards the media message, and thus the media message is sent to the recipient, which implements sending of the media message.

For example, in a situation that the media server to which the mailbox of the sender belongs and the media server to which the mailbox of the recipient belongs are the same, the media server can directly send the media message to the storage unit corresponding to the recipient (i.e. the mailbox). In a situation that the media server to which the mailbox of the sender belongs and the media server to which the mailbox of the recipient belongs are different, after the media message is interacted between the media server to which the mailbox of the sender belongs and the media server to which the mailbox of the recipient belongs, the media server to which the mailbox of the recipient belongs sends the media message to the mailbox of the recipient. Through the example, with regard to the mailbox of the sender and the mailbox of the recipient in the same media server, the media message is directly forwarded, and the implementation way thereof is convenient and reliable. With regard to the mailbox of the sender and the mailbox of the recipient in the different media servers, the media server to which the mailbox of the sender belongs and the media server to which the mailbox of the recipient belongs perform the interaction of the media message through the Simple Mail Transfer Protocol (SMTP), and the media message is delivered to the mailbox of the recipient, thereby implementing that the media message is sent across the media servers.

After the step S106, the recipient also can acquire the media message from the mailbox of the recipient through the IMAP, which is easy for the user to use and improves the user experience.

The technical scheme of the present document will be further described in detail in combination with the accompanying drawings and specific examples below.

### Example 1

In the example, a recipient user and a sending user belong to the same media server, and the sending user sends a media message to be sent of the sender to a mailbox to be sent of the sender in the media server through an APPEND instruction of the IMAP, and then the media server directly transmits the media message to a mailbox of the recipient user within the media server.

FIG. 2 is a flow diagram of a method for sending media messages according to the example 1 of the present document. As shown in FIG. 2, in the example, sending the media messages can include steps S202 to S206.

In step S202, after an IMAP client of the sending user is successfully authenticated by the server, the IMAP client delivers a locally established media message of the sender to the mailbox to be sent of the sending user in the media server through the APPEND instruction of the IMAP.

The APPEND instruction can carry the media message and a name of the mailbox to be sent of the sending user, wherein, the media message can carry an identifier of the recipient user.

In step S204, after successfully receiving the media message in step S202, the media server determines that the recipient user belongs to the current media server according to the identifier of the recipient user carried in the media message, and transmits the media message from the mailbox to be sent of the sending user to the mailbox of the recipient user in the current media server; and this process is a process within the media server.

In step S206, the recipient user acquires the media message from the mailbox of the recipient user through the IMAP.

### Example 2

In the example, the recipient user and the sending user belong to two different media servers, the sender user sends the media message to be sent of the sender to the mailbox to be sent of the sender in the media server through the APPEND instruction of the IMAP, and then the media server sends the media message to a media server to which the recipient user belongs through an SMTP.

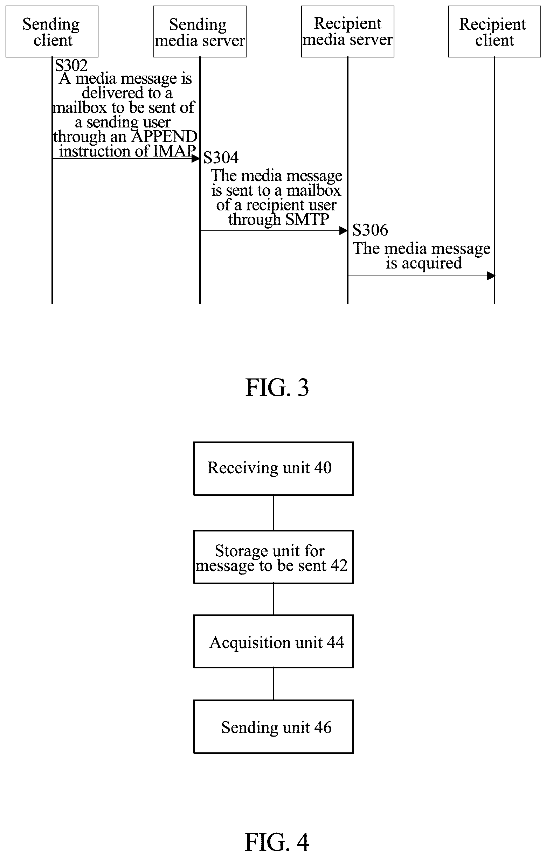

FIG. 3 is a flow diagram of a method for sending media messages according to the example 2 of the present document. As shown in FIG. 3, in the example, sending the media messages can include steps S302 to S306.

In step S302, after an IMAP client of the sending user is successfully authenticated, the IMAP client delivers a locally established media message of the sender to the mailbox to be sent of the sending user in the media server through the APPEND instruction of the IMAP. Wherein, the APPEND instruction carries the media message and a name of the mailbox to be sent; and the media message carries an identifier of the recipient user.

In step S304, after successfully receiving the media message in step S302, the media server of the sender determines a media server to which the recipient user belongs according to the identifier of the recipient user carried in the media message, and then it performs SMTP signaling interaction with the media server to which the recipient user belongs, and sends the media message from the mailbox to be sent of the sending user in the media server of the sender to the mailbox of the recipient user in the media server to which the recipient belongs.

In step S306, the recipient user acquires the media message from the mailbox of the recipient user through the IMAP.

It should be noted that, the steps shown in the flow diagrams of the accompanying drawings can be executed in the computer system with a group of computer executable instructions, and though the logic sequence is shown in the flow diagrams, in some cases, the illustrated and described steps can be executed in a sequence different from herein.

A device for sending media messages is also provided in the present document, and the device for sending media messages can be located at the above media server side, which is used for implementing the above method for sending media messages. FIG. 4 is a block diagram of structure of the device for sending media messages according to the example of the present document, and as shown in FIG. 4, a receiving unit 40, a storage unit for message to be sent 42 corresponding to a sending user, an acquisition unit 44 and a sending unit 46 are included. The device will be described in detail below.

The receiving unit 40 is configured to receive a media message which is delivered by a sending client through an Internet Message Access Protocol (IMAP) to a storage unit for message to be sent pre-allocated to a sending user; the storage unit for message to be sent 42 is connected with the receiving unit 40 and is configured to store the media message received by the receiving unit 40; the acquisition unit 44 is connected with the storage unit for message to be sent 42 and is configured to acquire a media message unsent in the storage unit for message to be sent 42; and the sending unit 46 is connected with the acquisition unit 44 and is configured to forward the media message according to an identifier of a recipient user carried in the media message acquired by the acquisition unit 44.

In a preferred embodiment of the example of the present document, the sending unit 46 can forward the media message through a Simple Mail Transfer Protocol (SMTP) according to the identifier of the recipient user. For example, the sending unit 46 can interact with a media server to which the recipient user belongs through the ways described in the above example of the method, and thus the media message is forwarded to the recipient. Or, if the recipient user and the sending user belong to the same media server, the sending unit 46 can transmit the media message to a storage unit allocated to the recipient user within the media server.

In a preferred embodiment of the example of the present document, the acquisition unit 44 is configured to scan the storage unit for message to be sent 42 at regular intervals, and acquire the media message unsent in the storage unit for message to be sent 42.

In another preferred embodiment of the example of the present document, the storage unit for message to be sent 42 is further configured to trigger the acquisition unit 44 when receiving the media message delivered by the client. The acquisition unit 44 acquires a media message newly delivered to the storage unit for message to be sent 42 under the triggering of the storage unit for message to be sent 42, and the sending unit 46 forwards the media message according to the identifier of the recipient user carried in the media message.

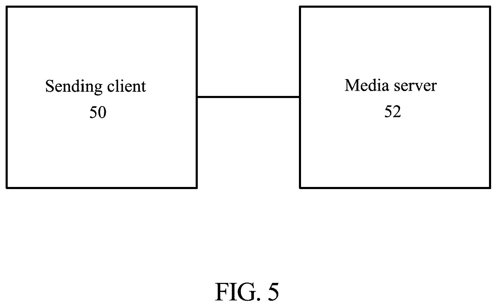

FIG. 5 is a schematic diagram of structure of a system for sending media messages according to the example of the present document, and the system can be configured to implement the above method for sending media messages provided in the example of the present document. As shown in FIG. 5, the system includes: a sending client 50, configured to deliver a media message to a media server 52 through an Internet Message Access Protocol (IMAP), wherein, the media message is a media message delivered to a storage unit for message to be sent pre-allocated to a sending user, and the media message carries an identifier of a recipient user; and the media server 52, including the device for sending media messages mentioned in the above example.

In a preferred embodiment of the example of the present document, the sending client 50 can deliver the media message through an APPEND instruction of the IMAP.

In conclusion, in the above one or more examples of the present document, a sender can send the media message to a media server to which the sender belongs through the IMAP, and the media server stores the media message in a storage unit for message to be sent corresponding to a sender, and forwards the media message according to an identifier of a recipient carried in the media message, thus the sender is enabled to send the media message to the recipient through the media server in a situation that only the IMAP is supported, which reduces the complexity of the user equipment.

Apparently, the skilled in the art should understand that the modules or steps of the present document mentioned above can be implemented through a universal calculating device, and they can be concentrated on a single calculating device or distributed in a network consisting of multiple calculating devices. Alternatively, the modules or steps can be implemented through program codes which can be executed by the calculating device, thus, they can be stored in a storage device to be executed by the calculating device, or they can be made into multiple integrated circuit modules or multiple modules or steps of them can be made into a single integrated circuit module to be implemented. Therefore, the invention is not limited to any combination of hardware and software in a specific form.

The above description is only the preferred examples of the invention, which is not used to limit the invention. The invention can have various modifications and changes for the skilled in the art.

## Claims

1. A method for sending media messages, **characterized by** comprising following steps of:
a media server receiving a media message which is delivered by a sending client through an Internet Message Access Protocol, IMAP, to a storage unit for message to be sent pre-allocated to a sending user (s101);
the media server storing the received media message in the storage unit for message to be sent of the sending user (s102); and
the media server acquiring a media message unsent in the storage unit for message to be sent, and forwarding the media message according to an identifier of a recipient user carried in the acquired media message (s103);
wherein, the step of the media server forwarding the media message according to an identifier of a recipient user carried in the acquired media message comprises:
with regard to a situation that the recipient user and the sending user belong to the same media server, the media server directly sending the media message to a mailbox of the recipient user within the media server;
with regard to a situation that the recipient user and the sending user belong to different media servers, the media server sending the media message to another media server to which the recipient user belongs through an Simple Mail Transfer Protocol, SMTP;
before the step of the media server receiving the media message, further comprising:
the media server firstly performing authentication on the sending user;
after the authentication, the media server establishing the storage unit for the sending user.

2. The method according to claim 1, wherein, the step of a media server receiving a media message which is delivered by a sending client through an IMAP to a storage unit for message to be sent comprises: the media server receiving the media message which is delivered by the sending client through an APPEND instruction of the IMAP to the storage unit for message to be sent.

3. The method according to claims 1 or 2, wherein, the step of the media server acquiring a media message unsent in the storage unit for message to be sent, and forwarding the media message according to an identifier of a recipient user carried in the acquired media message comprises:
the media server scanning the storage unit for message to be sent at regular intervals, acquiring the media message unsent in the storage unit for message to be sent, and forwarding the media message according to the identifier of the recipient user carried in the acquired media message.

4. The method according to claims 1 or 2, wherein, the step of the media server acquiring a media message unsent in the storage unit for message to be sent, and forwarding the media message according to an identifier of a recipient user carried in the acquired media message comprises:
when the storage unit for message to be sent of the media server receives the media message delivered by the sending client, the media server forwarding the media message according to the identifier of the recipient user carried in the media message.

5. A device for sending media messages, located at a media server side, **characterized by** comprising:
a receiving unit (40), configured to receive a media message which is delivered by a sending client through an Internet Message Access Protocol, IMAP, to a storage unit for message to be sent pre-allocated to a sending user;
the storage unit for message to be sent (42), configured to store the media message received by the receiving unit;
an acquisition unit (44), configured to acquire a media message unsent in the storage unit for message to be sent; and
a sending unit (46), configured to forward the media message according to an identifier of a recipient user carried in the media message acquired by the acquisition unit;
wherein, the sending unit (46) is configured to,
with regard to a situation that the recipient user and the sending user belong to the same media server, directly send the media message to a mailbox of the recipient user within the media server;
with regard to a situation that the recipient user and the sending user belong to different media servers, send the media message to another media server to which the recipient user belongs through an Simple Mail Transfer Protocol, SMTP,
wherein before receiving unit (40) receives the media message, the device firstly performs authentication on the sending user, and establishes the storage unit for message to be sent (42) for the sending user.

6. The device according to claim 5, wherein, the acquisition unit (44) is configured to scan the storage unit for message to be sent at regular intervals and acquire the media message unsent in the storage unit for message to be sent.

7. The device according to claim 5, wherein, the storage unit for message to be sent (42) is further configured to trigger the acquisition unit when receiving the media message delivered by the client.

8. A system for sending media messages, comprising:
a sending client (50), configured to deliver a media message to a media server through an Internet Message Access Protocol, IMAP, wherein, the media message is a media message delivered to a storage unit for message to be sent pre-allocated to a sending user, and the media message carries an identifier of a recipient user; and
the media server (52), comprising the device according to any one of claims 5 to 7.

9. The system according to claim 8, wherein, the sending client (50) delivers the media message through an APPEND instruction of the IMAP.

## Patentansprüche

1. Verfahren zum Senden von Mediennachrichten, **dadurch gekennzeichnet, dass** das Verfahren die folgenden Schritte umfasst:
Empfangen (s101), durch einen Medienserver, einer Mediennachricht, die von einem sendenden Klienten mittels eines Internetnachrichtenzugangsprotokolls (IMAP, Internet Message Access Protocol) an eine dem sendenden Benutzer vorab zugewiesene Speichereinheit für zu sendende Nachrichten ausgegeben wurde;
Speichern (s102), durch den Medienserver, der empfangenen Mediennachricht in der Speichereinheit für zu sendende Nachrichten des sendenden Benutzers; und
Erhalten (s103), durch den Medienserver, einer in der Speichereinheit für zu sendende Nachrichten vorhandenen, nicht gesendeten Mediennachricht und Weiterleiten der Mediennachricht gemäß einer in der erhaltenen Mediennachricht enthaltenen Kennung eines empfangenden Benutzers;
wobei der Schritt des Weiterleitens der Mediennachricht gemäß einer in der erhaltenen Mediennachricht enthaltenen Kennung eines empfangenden Benutzers umfasst:
in Bezug auf eine Situation, in der der empfangende Benutzer und der sendende Benutzer zu dem gleichen Medienserver gehören, direktes Senden, durch den Medienserver, der Mediennachricht in ein Postfach des empfangenden Benutzers innerhalb des Medienservers;
in Bezug auf eine Situation, in der der empfangende Benutzer und der sendende Benutzer zu unterschiedlichen Medienservern gehören, Senden, durch den Medienserver, der Mediennachricht an einen anderen Medienserver, zu dem der empfangende Benutzer gehört, mittels eines einfachen Nachrichtenübertragungsprotokolls (SMTP-Protokoll, Simple Mail Transfer Protocol);
weiterhin umfassend, vor dem Schritt des Empfangens der Mediennachricht durch den Medienserver:
zuerst Durchführen, durch den Medienserver, einer Authentifizierung des sendenden Benutzers;
nach der Authentifizierung Erstellen, durch den Medienserver, der Speichereinheit für den sendenden Benutzer.

2. Verfahren gemäß Anspruch 1, wobei der Schritt des Empfangens, durch einen Medienserver, einer Mediennachricht, die von einem sendenden Klienten mittels IMAP-Protokoll an eine Speichereinheit für zu sendende Nachrichten ausgegeben wurde, umfasst: Empfangen, durch den Medienserver, der Mediennachricht, die von dem sendenden Klienten mittels einer APPEND-Anweisung des IMAP-Protokolls an die Speichereinheit für zu sendende Nachrichten ausgegeben wurde.

3. Verfahren gemäß Anspruch 1 oder 2, wobei der Schritt des Erhaltens, durch den Medienserver, einer in der Speichereinheit für zu sendende Nachrichten vorhandenen, nicht gesendeten Mediennachricht und des Weiterleitens der Mediennachricht gemäß einer in der erhaltenen Mediennachricht enthaltenen Kennung eines empfangenden Benutzers umfasst:
Scannen, durch den Medienserver, der Speichereinheit für zu sendende Nachrichten in regelmäßigen Abständen, Erhalten der in der Speichereinheit für zu sendende Nachrichten vorhandenen, nicht gesendeten Mediennachricht und Weiterleiten der Mediennachricht gemäß der in der erhaltenen Mediennachricht enthaltenen Kennung des empfangenden Benutzers.

4. Verfahren gemäß Anspruch 1 oder 2, wobei der Schritt des Erhaltens, durch den Medienserver, einer in der Speichereinheit für zu sendende Nachrichten vorhandenen, nicht gesendeten Mediennachricht und des Weiterleitens der Mediennachricht gemäß einer in der erhaltenen Mediennachricht enthaltenen Kennung eines empfangenden Benutzers umfasst:
wenn die Speichereinheit für zu sendende Nachrichten des Medienservers die von dem sendenden Klienten ausgegebene Nachricht empfängt, Weiterleiten der Mediennachricht gemäß der in der Mediennachricht enthaltenen Kennung des empfangenden Benutzers.

5. Vorrichtung zum Senden von Mediennachrichten, die sich seitens eines Medienservers befindet, **dadurch gekennzeichnet, dass** die Vorrichtung umfasst:
eine Empfängereinheit (40), die konfiguriert ist zum Empfangen einer Mediennachricht, die von einem sendenden Klienten mittels eines Internetnachrichtenzugangsprotokolls (IMAP-Protokoll, Internet Message Access Protocol) an eine dem sendenden Benutzer vorab zugewiesene Speichereinheit für zu sendende Nachrichten ausgegeben wurde;
die Speichereinheit für zu sendende Nachrichten (42), die konfiguriert ist zum Speichern der von der Empfängereinheit empfangenen Mediennachricht;
eine Erhaltungseinheit (44), die konfiguriert ist zum Erhalten einer in der Speichereinheit für zu sendende Nachrichten vorhandenen, nicht gesendeten Mediennachricht; und
eine Sendereinheit (46), die konfiguriert ist zum Weiterleiten der Mediennachricht gemäß einer in der von der Erhaltungseinheit erhaltenen Mediennachricht enthaltenen Kennung eines empfangenden Benutzers;
wobei die Sendereinheit (46) konfiguriert ist zum:
in Bezug auf eine Situation, in der der empfangende Benutzer und der sendende Benutzer zu dem gleichen Medienserver gehören, direkten Senden der Mediennachricht in ein Postfach des empfangenden Benutzers innerhalb des Medienservers;
in Bezug auf eine Situation, in der der empfangende Benutzer und der sendende Benutzer zu unterschiedlichen Medienservern gehören, Senden der Mediennachricht an einen anderen Medienserver, zu dem der empfangende Benutzer gehört, mittels eines einfachen Nachrichtenübertragungsprotokolls (SMTP-Protokoll, Simple Mail Transfer Protocol);
wobei vor dem Empfangen der Mediennachricht durch die Empfängereinheit (40) die Vorrichtung zuerst eine Authentifizierung bei dem sendenden Benutzer durchführt und die Speichereinheit für zu sendende Nachrichten (42) für den sendenden Benutzer erstellt.

6. Vorrichtung gemäß Anspruch 5, wobei die Erhaltungseinheit (44) konfiguriert ist zum Scannen der Speichereinheit für zu sendende Nachrichten in regelmäßigen Abständen und zum Erhalten der in der Speichereinheit für zu sendende Nachrichten vorhandenen, nicht gesendeten Mediennachricht.

7. Vorrichtung gemäß Anspruch 5, wobei die Speichereinheit für zu sendende Nachrichten (42) weiterhin konfiguriert ist zum Auslösen der Erhaltungseinheit, wenn die von dem sendenden Klienten ausgegebene Mediennachricht empfangen wird.

8. System zum Senden von Mediennachrichten, wobei das System umfasst:
einen sendenden Klienten (50), der konfiguriert ist zum Ausgeben einer Mediennachricht an einen Medienserver mittels eines Internetnachrichtenzugangsprotokolls (IMAP-Protokoll, Internet Message Access Protocol), wobei es sich bei der Mediennachricht um eine Mediennachricht handelt, die an eine einem sendenden Benutzer vorab zugewiesene Speichereinheit für zu sendende Nachrichten ausgegeben wurde, und wobei die Mediennachricht eine Kennung eines empfangenden Benutzers enthält; und
wobei der Medienserver (52) die Vorrichtung gemäß einem der Ansprüche 5 bis 7 umfasst.

9. System gemäß Anspruch 8, wobei der sendende Klient (50) die Mediennachricht mittels einer APPEND-Anweisung des IMAP-Protokolls ausgibt.

## Revendications

1. Procédé d'envoi de messages multimédia, **caractérisé en ce qu'**il comprend les étapes suivantes au cours desquelles :
un serveur multimédia reçoit un message multimédia qui est délivré par un client expéditeur, par le biais d'un protocole IMAP (Internet Message Access Protocol), auprès d'une unité de stockage de message à envoyer pré-affectée à un utilisateur expéditeur (s101) ;
le serveur multimédia stocke le message multimédia reçu dans l'unité de stockage de message à envoyer appartenant à l'utilisateur expéditeur (s102) ; et
le serveur multimédia acquiert un message multimédia non envoyé présent dans l'unité de stockage de message à envoyer, et transmet le message multimédia conformément à un identifiant d'un utilisateur destinataire dont est porteur le message multimédia acquis (s103) ;
dans lequel l'étape au cours de laquelle le serveur multimédia transmet le message multimédia conformément à un identifiant d'un utilisateur destinataire dont est porteur le message multimédia acquis comprend le fait que :
eu égard à une situation dans laquelle l'utilisateur destinataire et l'utilisateur expéditeur appartiennent au même serveur multimédia, le serveur multimédia envoie directement le message multimédia à une boîte à lettres électronique de l'utilisateur destinataire au sein du serveur multimédia,
eu égard à une situation dans laquelle l'utilisateur destinataire et l'utilisateur expéditeur appartiennent à différents serveurs multimédias, le serveur multimédia envoie le message multimédia à un autre serveur multimédia auquel appartient l'utilisateur destinataire, par le biais d'un protocole SMTP (Simple Mail Transfer Protocol) ;
avant l'étape au cours de laquelle le serveur multimédia reçoit le message multimédia, il comprend en outre les opérations au cours desquelles :
le serveur multimédia réalise tout d'abord une authentification concernant l'utilisateur expéditeur,
suite à l'authentification, le serveur multimédia établit l'unité de stockage pour l'utilisateur expéditeur.

2. Procédé selon la revendication 1, dans lequel l'étape au cours de laquelle un serveur multimédia reçoit un message multimédia qui est délivré par un client expéditeur par le biais d'un protocole IMAP auprès d'une unité de stockage de message à envoyer comprend l'opération suivante : le serveur multimédia reçoit le message multimédia qui a été délivré par le client expéditeur, par le biais d'une commande APPEND du protocole IMAP, auprès de l'unité de stockage de message à envoyer.

3. Procédé selon la revendication 1 ou 2, dans lequel l'étape au cours de laquelle le serveur multimédia acquiert un message multimédia non envoyé présent dans l'unité de stockage de message à envoyer et transmet le message multimédia conformément à un identifiant d'un utilisateur destinataire dont est porteur le message multimédia acquis comprend l'opération suivante :
le serveur multimédia analyse l'unité de stockage de message à envoyer à intervalles réguliers, acquiert le message multimédia non envoyé présent dans l'unité de stockage de message à envoyer, et transmet le message multimédia conformément à l'identifiant de l'utilisateur destinataire dont est porteur le message multimédia acquis.

4. Procédé selon la revendication 1 ou 2, dans lequel l'étape au cours de laquelle le serveur multimédia acquiert un message multimédia non envoyé présent dans l'unité de stockage de message à envoyer et transmet le message multimédia conformément à un identifiant d'un utilisateur destinataire dont est porteur le message multimédia acquis comprend l'opération suivante :
lorsque l'unité de stockage de message à envoyer du serveur multimédia reçoit le message multimédia délivré par le client expéditeur, le serveur multimédia transmet le message multimédia conformément à l'identifiant de l'utilisateur destinataire dont est porteur le message multimédia.

5. Dispositif d'envoi de messages multimédia, situé côté serveur multimédia, **caractérisé en ce qu'**il comprend :
une unité réceptrice (40), configurée pour recevoir un message multimédia qui est délivré par un client expéditeur par le biais d'un protocole IMAP (Internet Message Access Protocol) auprès d'une unité de stockage de message à envoyer pré-affectée à un utilisateur expéditeur ;
l'unité de stockage de message à envoyer (42), configurée pour stocker le message multimédia reçu par l'unité réceptrice ;
une unité d'acquisition (44), configurée pour acquérir un message multimédia non envoyé présent dans l'unité de stockage de message à envoyer ; et
une unité émettrice (46), configurée pour transmettre le message multimédia conformément à un identifiant d'un utilisateur destinataire dont est porteur le message multimédia acquis par l'unité d'acquisition ;
dans lequel l'unité émettrice (46) est configurée pour,
eu égard à une situation dans laquelle l'utilisateur destinataire et l'utilisateur expéditeur appartiennent au même serveur multimédia, envoyer directement le message multimédia à une boîte à lettres électronique de l'utilisateur destinataire au sein du serveur multimédia, eu égard à une situation dans laquelle l'utilisateur destinataire et l'utilisateur expéditeur appartiennent à différents serveurs multimédias, envoyer le message multimédia à un autre serveur multimédia auquel appartient l'utilisateur destinataire, par le biais d'un protocole SMTP (Simple Mail Transfer Protocol) ;
dans lequel, avant que l'unité réceptrice (40) ne reçoive le message multimédia, le dispositif réalise tout d'abord une authentification concernant l'utilisateur expéditeur, et établit l'unité de stockage de message à envoyer (42) pour l'utilisateur expéditeur.

6. Dispositif selon la revendication 5, dans lequel l'unité d'acquisition (44) est configurée pour analyser l'unité de stockage de message à envoyer à intervalles réguliers et acquérir le message multimédia non envoyé présent dans l'unité de stockage de message à envoyer.

7. Dispositif selon la revendication 5, dans lequel l'unité de stockage de message à envoyer (42) est configurée en outre pour déclencher l'unité d'acquisition lors de la réception du message multimédia délivré par le client.

8. Système d'envoi de messages multimédia, comprenant :
un client expéditeur (50) configuré pour délivrer un message multimédia auprès d'un serveur multimédia par le biais d'un protocole IMAP (Internet Message Access Protocol), le message multimédia étant un message multimédia délivré auprès d'une unité de stockage de message à envoyer pré-affectée à un utilisateur expéditeur, et le message multimédia étant porteur d'un identifiant d'un utilisateur destinataire ; et
le serveur multimédia (52), comprenant le dispositif selon l'une quelconque des revendications 5 à 7.

9. Système selon la revendication 8, dans lequel le client expéditeur (50) délivre le message multimédia par le biais d'une commande APPEND du protocole IMAP.
